(19) Europäisches Patentamt
European Patent Office
Office européen des brevets

(11) **EP 4 447 392 B1**

(12) **EUROPEAN PATENT SPECIFICATION**

(45) Date of publication and mention
of the grant of the patent:
**15.01.2025 Bulletin 2025/03**

(21) Application number: **23382339.2**

(22) Date of filing: **13.04.2023**

(51) International Patent Classification (IPC):
*H04L 41/0806* (2022.01)   *H04L 41/0816* (2022.01)
*H04L 41/044* (2022.01)   *H04L 41/16* (2022.01)
*H04L 43/08* (2022.01)   *H04W 24/00* (2009.01)
*H04L 41/046* (2022.01)   *H04L 41/0604* (2022.01)
*H04L 41/082* (2022.01)   *H04L 41/0823* (2022.01)
*H04L 41/0895* (2022.01)   *H04L 41/0897* (2022.01)
*H04L 41/14* (2022.01)   *H04L 41/147* (2022.01)
*H04L 41/5019* (2022.01)   *H04L 43/04* (2022.01)
*H04L 43/0817* (2022.01)

(52) Cooperative Patent Classification (CPC):
**H04L 41/0816; H04L 41/044; H04L 41/0806;**
**H04L 41/16; H04L 43/08; H04W 24/08;**
H04L 41/046; H04L 41/0613; H04L 41/082;
H04L 41/0823; H04L 41/0895; H04L 41/0897;
H04L 41/145; H04L 41/147; H04L 41/5019;   (Cont.)

(54) **DISTRIBUTED INTELLIGENCE FOR EVOLVED OPEN RADIO ACCESS NETWORK MANAGEMENT AND CORRESPONDING METHOD**

VERTEILTE INTELLIGENZ FÜR EVOLVED OPEN RADIO ACCESS NETWORK MANAGEMENT UND ENTSPRECHENDES VERFAHREN

INTELLIGENCE DISTRIBUÉE POUR GESTION DE RÉSEAU D'ACCÈS RADIO OUVERT ÉVOLUÉ ET PROCÉDÉ CORRESPONDANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**16.10.2024 Bulletin 2024/42**

(73) Proprietor: **CENTRE TECNOLOGIC DE
TELECOMUNICACIONS
DE CATALUNYA (CTTC)
08860 Castelldefels (ES)**

(72) Inventors:
• **BLANCO, Luis**
**08860 Castelldefels (ES)**
• **ZEYDAN, Engin**
**08860 Castelldefels (TR)**
• **MANGUES, Josep**
**08860 Castelldefels (ES)**
• **VETTORI, Luca**
**08860 Castelldefels (ES)**
• **BARRACHINA, Sergio**
**08860 Castelldefels (ES)**
• **REZAZADEH, Farhad**
**08860 Castelldefels (ES)**

(74) Representative: **Mohammadian, Dario
KUKATI
P.O.Box 21021
08080 Barcelona (ES)**

(56) References cited:
WO-A1-2023/283102   US-A1- 2022 014 963
US-A1- 2022 038 902   US-A1- 2022 167 236

• **CORONADO ESTEFANIA ET AL: "Zero Touch
Management: A Survey of Network Automation
Solutions for 5G and 6G Networks", IEEE
COMMUNICATIONS SURVEYS & TUTORIALS,
IEEE, vol. 24, no. 4, 5 October 2022 (2022-10-05),
pages 2535 - 2578, XP011928125, DOI: 10.1109/
COMST.2022.3212586**

- **POLESE MICHELE ET AL: "Understanding O-RAN: Architecture, Interfaces, Algorithms, Security, and Research Challenges", IEEE COMMUNICATIONS SURVEYS & TUTORIALS, IEEE, vol. 25, no. 2, 21 January 2023 (2023-01-21), pages 1376 - 1411, XP011941195, DOI: 10.1109/ COMST.2023.3239220**

(52) Cooperative Patent Classification (CPC): (Cont.)
H04L 43/04; H04L 43/0817

## Description

## TECHNICAL FIELD

The present invention relates generally to the field of communication technologies, and in particular, to an evolved open radio access network, together with a corresponding method.

## BACKGROUND OF THE INVENTION

A radio access network, RAN, is part of a mobile telecommunication system which implements a radio access technology. Conceptually, it resides between a device such as any remotely controlled machine and provides connection with its core network, CN. Open RAN, O-RAN, refers to radio access technology standards for RAN interfaces which support interoperation between vendors' equipment. An O-RAN has three main building blocks - Radio Unit O-RU, Distributed Unit O-DU, and Centralized Unit O-CU.

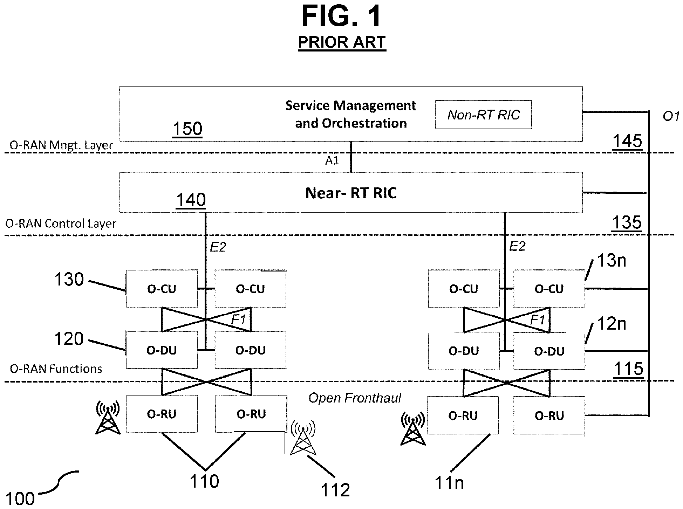

**FIG. 1** depicts a conventional O-RAN architecture 100 together with its basic constituent components. The radio frequency signals are transmitted, received, amplified, and digitized in the O-RU, which resides in the fronthaul layer and is normally integrated into the antenna, which resides in the terrestrial network TN 112. The O-DU and O-CU of the base station receive the digitized radio signals via a fronthaul layer interface 115 and sends, or otherwise makes available, them into the control layer via an E2 interface 135, which in turn is managed by the management layer via an A1 interface 145. O-DU and O-CU communicate via an F1 interface.

In further detail, the functions of each component are:

- O-RAN radio unit, O-RU 110, processes radio frequencies received by the physical layer of the network. The processed radio frequencies are sent to the O-DU.
- O-RAN distributed unit, O-DU 120, is a logical node that handles the signals received from the O-RU and it hosts a set of protocols, which are the radio link control, RLC, protocol, medium access control, MAC, protocol, and the physical interface, PHY.
- O-RAN central unit, O-CU 130, is a logical node that hosts another set of protocols, which are the radio resource control, RRC, service data adaptation protocol, SDAP, and packet data convergence protocol, PDCP.
- RAN Intelligent Controller 140, RIC, implements logical functions for controlling and optimizing the elements and resources of an O-RAN, with granular data collection and communication over the E2 interface to the O-CU and O-DU. At best, current RIC are near-real-time (near-RT), which is defined as having a latency between approximately 10ms and approximately 100ms.
- Service Management and Orchestration Framework, SMO 150 - allows interoperation and communication within the O-RAN. The SMO connects to and manages the Near-RT RICs, the O-RU, the O-CU, and O-DU. At best, current SMO are non-real-time (non-RT), which is defined as having a latency above approximately 100ms.

The O-RAN vision is based on the three principles of (i) open interfaces; (ii) cloudification; and (iii) automation through closed-loop control. It aims at the disaggregation of functions and exposure of internal interfaces for interoperability, controllability, and programmability. A number of O-RAN Intelligent Controllers are available to connect through open interfaces to the disaggregated components of the O-RAN and implement control loops that run at different time scales. RIC architecture exposes a set of telemetry and control interfaces with predefined service models (known as the E2 interface). Within these RICs, so called x/rApps are continuously executing network performance optimization closed control loops targeting different, sometimes competing network optimization goals.

At present, non-real-time O-RAN controls have been improved to near-real-time O-RAN controls by means of the xApp applications accessing these service models and making the closed control loops faster. Near-RT service provision has been defined as comprising a delay of between approximately 10 ms and approximately 100 ms. The problem with these conventional implementations is mainly that even this latency is excessive for different service requirements envisaged in 5G and 6G systems, which require real-time, RT, reactivity equal to or below approximately 10 ms latency.

Another problem is that, whereas current O-RAN implementations follow a disaggregated approach, they lack fully distributed network management and orchestration capabilities. They therefore suffer from scalability issues due to centralized intelligence and control located in the SMO component and near-RT RIC layers. Publication US-A-2022/0 167 236 refers to one such problematic implementation, disclosing centralized control by a radio access network (RAN) intelligent controller (RIC), configured to produce a representation describing a state of the RAN based on a context of the RAN and instruct an action enabling re-configuration of at least one network element for improving its performance within the context.

Therefore, a need exists to effectively solve the abovementioned problems.

# EP 4 447 392 B1

## SUMMARY

The present invention is defined in the appended independent claims to which reference should be made. Advantageous features are set out in the appended dependent claims.

It is therefore an object of the present invention to provide solutions to the above-mentioned problems as defined in the claims. The proposed O-RAN architecture of the invention comprises several management sub-systems distributing both the intelligence as well as the decision making across various components. This allows for the collection of internal states and real-time data from O-RAN functions in a dynamic manner through distributed intelligence elements, which can be used for various applications such as mobility control, QoS management, interference management, and dynamic power saving. This detailed platform telemetry helps operators improve network monitoring and performance optimization, as well as enabling new artificial intelligence and automation capabilities. For instance, this architecture can be used to detect interference signals at the O-RAN's L1 layer, allowing for improved interference management. Additionally, dynamic power saving is achieved as the number of packets queued is monitored, estimating pending process loads, and optimizing CPU frequency to reduce O-RAN server power consumption. This evolved O-RAN can be used for service providers, operators and infrastructure owners to improve the scalability of their infrastructure, for example, enabling massive numbers of network slices while keeping the complexity of the system under control

In one aspect, the proposed O-RAN architecture is generalized to fully integrated network structure of 6G networks that considers connectivity in terrestrial networks (TNs). This enables the development of network structures that provide ubiquitous connectivity and support a wide range of applications and use cases.

Therefore, it is an object of the invention to provide a network component in an evolved O-RAN which is distributed and scalable enabling real-time management and control.

It is another object of the present invention to provide an evolved O-RAN which is distributed and scalable enabling real-time management and control.

It is another object of the present invention to provide a method in a network component in an evolved O-RAN.

It is another object of the present invention to provide a method in an evolved O-RAN.

It is another object of the present invention to provide a computer program comprising instructions, once executed on a processor, for performing the steps of a method in a network component or in an evolved O-RAN.

It is another object of the present invention to provide a computer readable medium comprising instructions, once executed on a processor, for performing the steps of a method in a network component or in an evolved O-RAN.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular, the invention provides methods, apparatus, systems, processors, program codes, computer readable media, and other apparatuses and elements that implement various aspects, configurations and features of the invention, as described below.

## BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.

**FIG. 1** depicts a conventional O-RAN architecture.
**FIG. 2** depicts an evolved O-RAN architecture according to one aspect.
**FIG. 3** depicts an evolved O-RAN architecture and the corresponding method steps of intelligent O-RAN management according to another aspect.

## DETAILED DESCRIPTION OF THE INVENTION

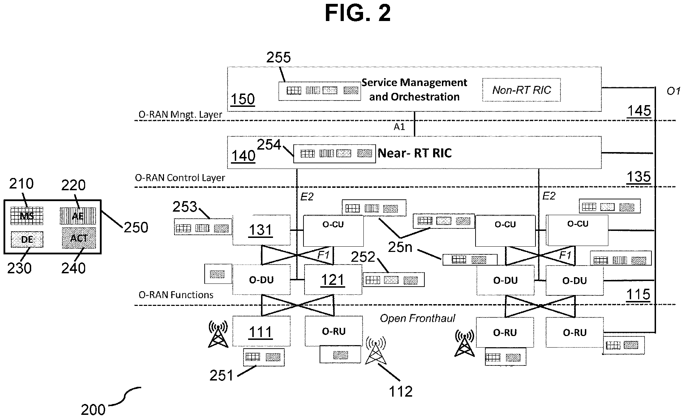

**FIG. 2** depicts an evolved O-RAN architecture 200 according to one aspect, showing the proposed distributed and scalable evolved O-RAN design with independently assignable O-RAN functional elements performing different functionalities. The set 250 of independently assignable O-RAN functional elements (210; 220; 230; 240) comprises a monitoring system MS, an analytical engine AE, a decision engine DE, and an actuator ACT. Any one or combination of these independently assignable elements can be distributed in any or all of the layers of the O-RAN architecture thereby forming a closed loop system, including O-RAN management layer, O-RAN control layer, and O-RAN functions and open fronthaul layers. These software components can be loaded onto any constituent component of the O-RAN architecture, such as O-RU, O-DU, O-CU, RIC, or SMO, at any level, to perform the required functionalities. The evolved O-RAN architecture is designed to be flexible and scalable, allowing the distribution of these functional elements across different layers of the network. This distribution enables the closed-loop system to efficiently monitor, analyze, decide, and act on the network data in real-time. For example, MS in RU (251) is not going to collect the same metrics as MS RU (110), since they each connect to different network equipment.

The monitoring system MS 210, or means of monitoring, is the entity responsible for gathering a set of metrics from the systems that are being managed and controlled. The metrics, or network measurements, can be gathered across all the different components of the network, such as the core network, radio access network, or transport network. Radio network-related metrics are for example, signal strength, quality, signal-to-noise ratio, throughput, communication channel quality, transmission power, and so on. Transport network-related metrics are for example switch router utilization, network topology, and so on, or cloud-related metrics, for example CPU, RAM, memory utilization of O-RAN functions. These network measurements are used to feed inputs to the analytic engine or the decision engine.

The analytic engine AE 220, or means of analysis, performs time-series predictions as well as feature space selection with regressions, clustering and classification, to extract insights from the measurements collected by the MS and identify particular issues that need handling. For example, a federated learning model used in AE 220 can be used for different intelligence purposes such as to predict traffic patterns, to compute utilization (e.g., CPU, RAM), to forecast power usage of devices, and so on.

The decision engine DE 230, or means of deciding, determines actions for the lifecycle management, LCM, that need to be applied to handle the issues identified by the AE. In one aspect, the DE also controls the MS measurement granularity. For example, in a large network infrastructure with multiple servers and applications running on them, monitoring system (MS) is constantly gathering data on various performance metrics, such as CPU utilization, memory usage, and network traffic. The analytic engine is analyzing this data and identifying issues, such as a server that is experiencing high CPU utilization. Now, it is up to the decision engine (DE) to determine what actions to take to address this issue. For example, the DE might decide to migrate the workload from the overloaded server to a less busy one or increase the server's resources by adding more memory or CPU. Some advanced decision-making techniques (for example, based on federated deep reinforcement learning techniques) can be used within to learn the amount of bandwidth allocation to each network elements based on the traffic patterns in each. Additionally, DE might decide to increase the frequency of CPU utilization measurements to detect issues sooner or decrease the frequency to reduce overhead. The DE controls the granularity of the measurements taken by the MS. The DE's role in managing the lifecycle of the network is crucial because it determines the actions to take to ensure that the system is running efficiently and effectively. The ability to control the granularity of the measurements is also important because it allows the system to be optimized for performance and cost-effectiveness. By making informed decisions based on the data provided by the MS and the AE, the DE can ensure that the network infrastructure is operating at peak performance and providing value to users of operators.

In another aspect, the DE also determines the AE prediction parameters. Assume that in a predictive network fault detection system for network equipment (for example, in radio or core network), large amounts of network data can be generated. The AE is responsible for analyzing this data and detecting patterns that can indicate potential issues with the network equipment. However, the accuracy of the analytic engine's predictions depends on the parameters used for analysis. This is where the decision engine determines the prediction parameters that the analytic engine will use to analyze the network data. For example, the DE might determine the time window for data analysis or the type of algorithm to use for pattern detection. By adjusting these parameters, the DE can optimize the performance of the predictive network fault detection system. For instance, if the DE determines that a shorter time window should be used for analysis, the AE may be more responsive to real-time changes in the network equipment behavior. On the other hand, if the DE determines that a longer time window is necessary, the AE may be better at detecting trends over time. The DE's ability to determine the prediction parameters for the analytic engine is relevant because it allows for more accurate predictions and, ultimately, more efficient maintenance. By optimizing the performance of the AE through these parameters, the predictive maintenance system can better identify potential issues and prevent unexpected downtime, reducing costs and improving productivity. Additionally, the DE's ability to dynamically adjust prediction parameters in response to changing conditions can help the system adapt to evolving operational environments.

The actuator ACT 240, or means of actuating, is responsible for executing reconfiguration-related operations. In one aspect, the decisions are the ones taken by the DE, and the ACT therefore converts DE decisions to corresponding actions. Suppose that in a network management system, the DE is responsible for analyzing data from various sources, such as network traffic, signal strength, and user behavior, to determine what actions need to be taken to optimize network performance. For instance, the DE may detect that a particular cell is experiencing heavy congestion, leading to packet loss and slow data rate. In this scenario, the ACT would be responsible for taking the necessary actions to reconfigure the network and alleviate the congestion. For example, the actuator may reassign users to nearby cells, adjust the signal strength of specific cells, or add additional network capacity in the form of new equipment or upgraded software. The relevance of the ACT in this example lies in its ability to translate the decisions into specific network configuration changes. In one aspect, without the ACT, the network would not be able to respond to the DE's analysis, potentially leading to continued congestion and poor network performance. Additionally, the ACT must be able to execute these commands quickly and accurately to ensure that users do not experience service disruptions or outages. Therefore, the ACT plays a critical role in converting the DE's decisions into reconfiguration-related operations in cellular networks and other complex systems. Its ability to execute these commands accurately and efficiently is essential for maintaining optimal system performance and ensuring a positive user experience. As mentioned, the global effect of having ACTs dynamically loaded and torn down is that it enables real-time O-RAN management.

Any one element of the set of O-RAN functional elements (MS 210, AE 220, DE 230, ACT 240) can be dynamically loaded onto any constituent component (O-RU, O-DU, O-CU, RIC, SMO) of the O-RAN architecture, at any level, and third-party code can be executed in a trusted and safe manner by relying on cloud native principles. This allows operators and trusted third-party developers to write their own monitoring, analytics and decision-making software that can be deployed at runtime at distributed locations in the architecture. The ability to dynamically load elements of the set of O-RAN functional elements to any constituent component (O-RU, O-DU, O-CU, RIC, SMO) of the O-RAN architecture and executing third-party code in a distributed manner provide significant advantages over prior art. It enables greater flexibility, scalability, real-time responsiveness, and security, allowing operators and third-party developers to optimize network performance and deliver a better user experience. In terms of flexibility, operators and third-party developers can write their own monitoring, analytics, and decision-making software that can be deployed at runtime in distributed locations in the architecture. This allows for greater flexibility and customization, as software can be tailored to specific use cases and deployed where it is most effective. In terms of real-time responsiveness, by being able to deploy software at runtime and executing it in a distributed manner near to the various network equipment, the evolved O-RAN architecture can respond rapidly to changing network conditions, such as congestion or service disruptions, minimizing the impact on users and maintaining optimal system performance. In terms of scalability, the ability to dynamically load software onto any component of the architecture also allows for greater scalability. As network traffic and user demand increase, additional components can be added and software can be dynamically loaded to handle the increased load. In terms of security, by relying on cloud-native principles, such as containerization and microservices, security-assured third-party code can be executed in a trusted and safe manner, minimizing the risk of security breaches or other vulnerabilities.

As mentioned, any one or combination of these independently assignable elements can be distributed in any or all of the layers of the O-RAN architecture thereby forming a closed loop system, including O-RAN management layer, O-RAN control layer, and O-RAN functions and open fronthaul layers. Each set of independently assignable O-RAN functional elements is an instantiation which is designed for the particular component (O-RU, O-DU, O-CU, RIC, SMO) and the particular issue or problem it is handling. Therefore, in one example instantiation, O-RU 111 is loaded with an O-RU set 251 comprising one MS 210 and one ACT 240, whereas another O-RU is loaded with an instantiation of only a single ACT 210.

Regular operation requires at least one ACT 240 to be loaded and executed in every component of the network or at least one ACT 240 handling different components of the network. The reason for this is that the ACT is responsible for converting the decisions made by the DE into reconfiguration-related operations. Without the ACT, the DE would not be able to execute any changes, and the network would not be able to respond to changing conditions or optimize performance. The advantages of having at least one ACT loaded and executing in every component of the network are real-time responsiveness and scalability allowing operators to optimize network performance and deliver a better user experience. By having an ACT in every component of the network, the system can respond to changing conditions in real-time. This means that the network can adapt to changes such as congestion or service disruptions, minimizing the impact on users and maintaining optimal performance. Having an ACT in every component of the network also enables greater scalability.

As the network grows and additional components are added, each component can execute its own reconfiguration-related operations without relying on a centralized system. In another example instantiation, O-DU 121 is loaded with an O-DU set 252 comprising one MS 210, whereas another O-DU is loaded with an instantiation of one MS 210, one DE 230 and one ACT 240. In yet another example instantiation, O-CU 131 is loaded with an O-CU set 253 comprising one MS 210, one AE 220 and one ACT 240, whereas another O-CU is loaded with an instantiation of one MS 210, one DE 230 and one ACT 240. In yet another example instantiation, RIC 140 is loaded with an RIC set 254 comprising one instantiation of each functional element MS 210, AE 220, DE 230, and ACT 240. Similarly, in yet another example instantiation, SMO 150 is loaded with an SMO set 255 comprising one instantiation of each functional element MS 210, AE 220, DE 230, and ACT 240. RIC and SMO have also all four functional elements (MS 210, AE 220, DE 230, and ACT 240) because in the proposed architecture, there is a general hierarchy where SMO and RIC are on top of the design.

To provide real-time conflict resolution in the system, the upper element in the hierarchy will develop policies to solve these conflicts. For example, in case conflicts arise between O-CU elements, SMO and RIC will have global vision of the network and can take into account the end-to-end performance of the network, rather than just focusing on a specific component. However, the decisions made by RIC and SMO may not be taken in real-time. This is because considering the end-to-end performance of the network requires analyzing a large amount of data, and making decisions based on that analysis can take time. Additionally, the decisions made by RIC and SMO may require coordination with other network components, which can also add to the delay. Despite the delay in decision making, having RIC and SMO make informed decisions can be beneficial for the overall performance of the network. By taking into account the end-to-end performance of the network, RIC and SMO can ensure that changes made to one component of the network do not negatively impact the performance of other components. This can lead to better overall network performance and a better user experience.

Hence, the set of independently assignable O-RAN functional elements can be dynamically setup and torn down depending on real-time needs of the network and its users. The functionalities are therefore fully distributed in all layers of the hierarchy, from the SMO to the O-RU. It is scalable as a different number can be instantiated per layer and as the needs of the network grow, the number of sets which are loaded onto new O-RAN components (O-RU, O-DU, or O-CU) is easily deployed. This also enables true real-time operation, as a particular set is instantiated locally, at the O-RAN component (O-RU, O-DU, or O-CU) which requires it, and as soon as the issue is solved, the set is torn down. No time is wasted queuing incident alerts or reconfiguring resources.

These O-RAN functional elements can also be executed either inline or embedded to the main O-RAN components, O-RU, O-DU, or O-CU (for example, via dynamic code extension systems such as Extended Berkeley Packet Filter, eBPF, to run custom codes in Linux kernel) allowing them to get direct access to all important internal raw O-RAN function data structures, collecting statistics and making real-time inference and control decisions to perform the closed loop operation. This inline execution is quite fast while incurring less overhead on the RAN operations compared to execution with entities that are outside and interacting with O-RAN functions. Inline and embedded execution of O-RAN functional elements are functionally equivalent in the sense that they both provide the same advantage of low overhead. In both cases, the functional elements have direct access to the important internal raw O-RAN function data structures, allowing them to collect statistics and make real-time inference and control decisions to perform closed loop operation. However, there are some additional advantages to the inline execution of O-RAN functional elements. Firstly, by executing inline, the functional elements are able to interact with the O-RAN functions in a more tightly integrated manner, which can lead to better overall system performance. Secondly, inline execution can reduce latency and increase reliability, as there is no need to transfer data between different entities in the system. Another advantage of inline execution is that it can allow for more fine-grained control over the system. By having direct access to the internal data structures, the functional elements can collect more detailed information about the system and make more precise decisions about how to control it. This can lead to better optimization of system performance and improved resource utilization. Overall, both inline and embedded execution of O-RAN functional elements provide the same basic advantages of low overhead. However, inline execution can offer additional benefits in terms of tighter integration with the system, reduced latency and increased reliability, and more fine-grained control over the system.

One example scenario where the proposed evolved O-RAN architecture can solve problems is when a user roams from one terrestrial network to another, the evolved O-RAN system can use the MS to monitor the user's connection and gather data on the performance of the target network. This data can be fed into the AE, which can use machine learning algorithms to make predictions about the user's future network performance in the target network. The DE can then use this information to make decisions about how to optimize the user's network connection, such as by adjusting the network parameters or routing the user's traffic through a different network element. These decisions can be communicated to the ACT, which can execute the necessary reconfiguration-related operations to implement the chosen course of action. In ACT, the user's connection can be tunneled through a gateway that connects these two networks. This gateway would establish a secure and reliable connection between the user's device and the evolved O-RAN system, allowing the monitoring and optimization process to take place seamlessly across the two networks. For example, when the user roams between networks, its connection would be automatically routed through the gateway, which would then forward the user's traffic to the appropriate network element within the target network. The entire process would be transparent to the user, who would experience seamless and uninterrupted connectivity as it moves between different networks. This capability ensures that users receive a seamless and reliable network experience, even when roaming between different networks. Prior art systems address this problem by using separate network management systems for the different elements of the different networks, resulting in a more fragmented and less efficient network and struggles to provide real-time optimization and decision-making capabilities due to the lack of a unified architecture and real-time data exchange. Overall, the evolved O-RAN architecture provides a more flexible, efficient, and scalable approach to managing and optimizing the network, as it allows for more distributed management of network functions, real-time data analysis, and dynamic resource allocation.

A further improvement of the evolved O-RAN architecture is the integration of artificial intelligence. In this AI-driven system, entities such as O-DU can be used as federated learning clients whereas O-CU can perform the function of an aggregation server which interacts with the O-DUs to update the model used for machine learning ML purposes. The federated learning model can be used for different intelligence purposes such as to predict traffic patterns, to compute utilization (for example, CPU, RAM), to forecast power usage, and so on. Additionally, some advanced decision-making techniques (for example, based on deep reinforcement learning) can be used for example, within O-DU to predict the amount of bandwidth allocation to each associated O-RU.

For real-time management, monitoring data is continuously collected from the different evolved ORAN components using MS and uses this data to update the ML models through the FL process in the AE. Client selection and pruning steps can be performed periodically to ensure that only the most relevant and accurate models are used for the model updates. This can also be extended for real-time incident resolution, where a similar approach could be taken where the ML models are continuously updated using monitoring data from the evolved ORAN components, but the focus would be on detecting and resolving incidents in real-time. This could involve the use of anomaly detection techniques and the deployment of specific ML models for incident detection and resolution. The federated learning process could also be used to optimize resource allocation to different evolved ORAN components based on their current workload and performance metrics. The ML models could be trained to predict resource utilization and performance, and the results used to inform resource allocation decisions in real-time.

Hence, in another aspect, AI modules are integrated within the already described evolved O-RAN architecture and a method for intelligent O-RAN management is provided. This enables even further benefits in terms of scalability and sustainability as using the current and predicted future states of the O-RAN components helps preempt and prepare for handling potential problems and issues the network might have at maximum granular level, that is, at every component of every layer of the O-RAN.

In one aspect, to ensure scalability under massive slicing scenarios, a novel mutual information MI-driven stochastic federated learning FL policy is provided. In this method a subset of AEs that will participate in the FL task at each round are selected based on the MI values between the trained models of the clients and the previous global aggregated model. These stochastically selected AEs enable faster learning convergence enhancing the convergence time while maintaining the same computation cost no matter how the number of AEs increase over the network, for example, compared to traditional federated averaging approach that does not consider AE selection policy.

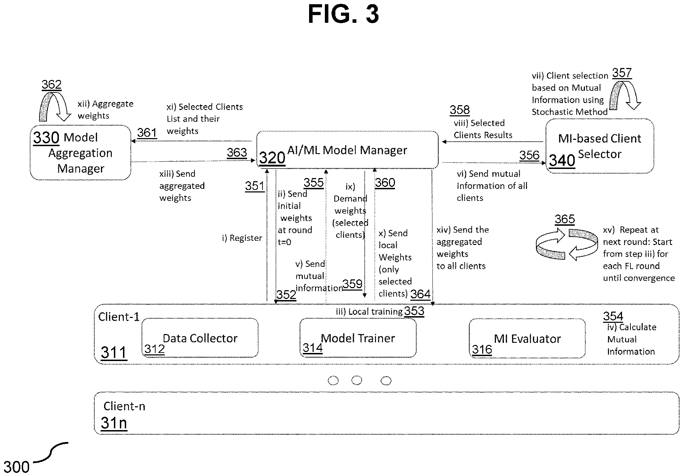

FIG. 3 depicts an AI-integrated O-RAN architecture and the corresponding method of intelligent O-RAN management. In an FL scheme, each client maintains a locally trained ML model, which it updates periodically and transmits upstream for aggregation with all local models of other clients. In the proposed improved FL scheme, in a first phase, clients are onboarded by transmitting initialization weights for training their local models, followed by a mutual information evaluation for that client. In a subsequent phase, all MI evaluation results are transmitted from all clients upstream where, based on the MI evaluation results, only a subset of clients is selected, and the model weights of only this subset is used for model aggregation. This architecture and method advantageously result in the joint optimization of the federated learning computation time and the underlying resource consumption.

To this end, each client 31n comprises a data collector 312, a model trainer 314 and a mutual information MI evaluator 316. The data collector, or means of data collecting, receives data and information locally available. The model trainer, or means of model training, uses this data and information to train the local ML model, after having been initialized using weights received from the model manager. The mutual information MI evaluator, or means of evaluating, determines the weights of its respective local model which will be used to select the clients with the lowest correlation in terms of mutual information when compared with the current aggregated model.

The AI/ML model manager module 320, or means of managing, is the primary interface between the clients (client-1 311 to client-n 31n), the model aggregation manager module 330 and the mutual information-based client selector module 340. The AI/ML model manager module exposes a RESTFUL API that allows the clients to interact with the model aggregation manager and mutual information-based client selector modules and submit and receive ML model update information to update their own local ML models. The mutual information-based client selector 340, or means of client selection, is a client selection module that uses the MI received from the clients to rank them accordingly and output a subset for aggregation. The model aggregation manager module 330, or means of aggregating, aggregates the model weights of only the subset of clients using a pre-defined aggregation rule (for example, a weighted sum rule or a Byzantine fault-tolerant aggregation rule).

Because the data used to train models on different clients can vary, some models may be similar to others while others may be vastly different. When local models have similar performance, it leads to unnecessary redundancy and increased communication costs. To address this drawback, the performance of all local ML models is evaluated and ranked by the mutual information-based client selector 340. By selecting a subset of the most effective models for aggregation based on their performance and mutual information, the communication burden between clients and the server is considerably reduced. By stochastically selecting only a subset of active clients/AEs in each FL round, the federated learning computation time and the underlying resource consumption are both optimized.

The mutual information-based client selector 340 assumes that the output weights $W_k$ of the current local network k, and the output weights $W_g$ for the aggregated global network g, follows Gaussian functions with respective variances $\sigma_k^2$ and $\sigma_g^2$ respectively. Consequently, the MI between $W_k$ and $W_g$ MI($W_k$;$W_g$), is defined as:

$$MI(W_k;W_g) = H(W_k) + H(W_g) - H(W_k,W_g) = -½ \log(1- \sigma_{g,k}^2) \qquad [\text{expression 1}]$$

where $\sigma_{g,k}^2$ is the correlation coefficient, $H(W_g)$, $H(W_k)$ are the entropy function of $W_k$ and $W_g$ and $H(W_g, W_k)$ is their mutual entropy values. So the local mutual information index is determined as a function of the mutual entropy of output weights of current local network and the output weights of the aggregated global network. In other words, the mutual information-based client selector 340 uses the mutual information index which is defined as the mutual entropy between the output weights of the current local network and the output weights of the aggregated global network. The MI is calculated based on the assumption that the output weights of both networks follow a Gaussian distribution. The formula for the mutual information index is a function of the entropy of the output weights of the local and global networks, and the correlation coefficient between them. By using this index, the client selector can make informed decisions about which clients to use for a particular round during the federated learning process. From the above equation, it can be observed that

    i. when the outputs $W_k$ and $W_g$ are uncorrelated, the correlation $\sigma_{g,k}$ is zero and their MI becomes very small;
    ii. when the outputs $W_k$ and $W_g$ become highly positively correlated, the correlation $\sigma_{g,k}$ is close to 1 and their MI tends to be noticeably large.

In order to efficiently update the aggregated model, the client's current local model is used to update the aggregated global network model, however this is performed by minimizing the correlation coefficient $\sigma_{g,k}$ between the current local network model and the aggregated global network model, which is equivalent to minimizing the MI between them. Since only distinct information is extracted, the aggregated model is updated in an optimized manner, by integrating into it only differential data which actually provides new information. Being an iterative process, during FL rounds, a lower MI indicates better learning, as it requires the network to have different weights for different inputs. Models with extremely low MI values are considered over-working, while those with excessively high MI are considered primitive models. When selecting a list of clients using a random stochastic approach, the stochastic selection of clients does not change the overall number of parameters for the global model, but it does affect the values of the parameters for the global model. This is because there is a higher likelihood that outliers clients' models will not be included in the calculation of the global model, which helps to avoid inaccuracies in the overall training process and delays in reaching convergence. This process helps by removing those models for combination that are overly complex or outdated.

Based on this architecture and principles, a method 350 of intelligent O-RAN management is provided. In a first phase of the method, a reduced client set is determined, which reduced set will be used for aggregation in a subsequent phase of operation. To this end, each client 31n first registers 351 with the AI/ML model manager module 320 by exchanging their IP addresses. At round t=0, AI/ML model manager module then sends 352, or otherwise makes available, initial weights of the model to be deployed at each local model that is present to N total clients to start the training process of the proposed MI-based stochastic FL. Next, each client collects the local data via data collector module 312, trains 353 the local models (for example, using Multi-Layer Perceptron MLP or Convolutional Neural Network CNN models) via model trainer module 314 to obtain trained weights based on the local dataset. After this training process ends, the MI evaluator 316 residing in each client calculates 354 the MI weights of their respective local models using the local weights (that is, $W_k$) and the previously sent global weights by AI/ML model manager module 320 (that is, $W_g$) according to expression 1 where $sigma_{g,k}$ is calculated at each round t based on the values of $W_g$ and $W_k$ at round t. The goal is to optimally utilize individual local device's current trained model for minimizing overall training loss using the private dataset of each client and calculating MI with the aggregated global model parameters. In each round t, each client uploads/sends 355, or otherwise makes available, their respective model MI weights to the AI/ML model manager module 320.

AI/ML model manager module 320 sends 356, or otherwise makes available, the MI values received from all active clients to the mutual information-based client selector module 340. The mutual information-based client selector module generates a probability distribution, for example by using a softmin function or a softmax activation function, or a similar function, and arranges the resulting MI values in ascending order to find the models that deviate from the norm (over-working and primitive models). It then evaluates the MI values according to pre-defined rules (for example, by generating the probability distribution of all clients based on the received model MI weights to select the clients stochastically) and selects 357 the clients based on this evaluation outcome. Clients with low MI weights are given a high probability of participating in FL to drive model convergence as they are aggregated.

In another aspect, clients with high MI weights are also taken into consideration, and also participate in FL training, albeit with a low probability, to ensure generalization from their datasets. The advantage of including clients with high mutual information weights in FL training with a low probability is that it can help to improve the generalization of the trained model. By including a diverse set of clients with different datasets, the trained model can learn to generalize better to new and unseen data. Clients with high mutual information weights may have datasets that are more representative of the overall distribution of data, and by including them in the training with a low probability, the trained model can learn to capture the underlying patterns and structure of the data more effectively. This can help to avoid overfitting and improve the accuracy and robustness of the trained model.

The balance between high and low mutual information clients can be implemented by adjusting the probability of high MI clients participating in FL training. This probability can be set as a hyperparameter that can be tuned based on the characteristics of the dataset and the performance requirements of the FL algorithm. One property is whether a dataset is independently and identically distributed, IID. For example, if the dataset is highly non-IID, meaning that the data distribution of each client is significantly different, it may be beneficial to have a higher probability of selecting clients with high MI values to ensure that the global model is trained on a diverse set of data. On the other hand, if the dataset is relatively IID, meaning that the data distribution of each client is similar, it may be more effective to select clients with low MI values to reduce the redundancy in the data used for training the global model. The exact value of the probability can be determined through experimentation and validation on a held-out dataset. It is important to note that the balance between high and low MI clients is a trade-off between diversity and redundancy, and the optimal probability will depend on the specific characteristics of the dataset and the goals of the FL algorithm.

In yet another aspect, in order to improve the performance and promote a faster convergence of the FL rounds, primitive and over-working local models can be pruned. In one aspect, a predefined percentage of the local clients' models is removed (namely, the clients that are at tails of the probability distribution). Another aspect uses knowledge distillation, where smaller and simpler models can be selected to mimic the behavior of larger and more complex models. The smaller models can then be used in place of the larger models, leading to faster inference and reduced computational costs. Yet another aspect uses structured pruning, where instead of randomly selecting a percentage of models to prune, the pruning is done in a more structured way, such as by removing entire layers or groups of weights. The percentage of models to prune can be determined based on various factors, such as the size of the overall model, the performance of the local models, and the computational resources available. For example, if the overall global model is very large and the local models are performing poorly, a higher percentage of models may need to be pruned to see a significant improvement in performance. On the other hand, if the computational resources are limited, a smaller percentage of models may need to be pruned to reduce the overall computational cost.

After the client selection has been completed through a stochastic selection process which involves selection based on a fraction of total clients as the new clients for FL round, the list of stochastically selected clients' results is sent 358, or otherwise made available, by the mutual information-based client selector module 340 to the AI/ML model manager module 320. Reducing the set of clients selected for the FL round can have several advantages. One advantage is that it reduces the communication and computational overhead involved in aggregating and processing updates from a large number of clients. This can lead to faster convergence and better overall performance of the FL system. Stochastic selection of a fraction of total clients also has its benefits. It can help prevent bias in the selection process, as selecting clients based on certain criteria (for example, their performance in previous rounds) could lead to overfitting or under-representation of certain types of clients. Additionally, stochastic selection can help improve the privacy and security of the FL system, as it makes it more difficult for adversaries to predict which clients will be selected and potentially target them for attacks.

Once the reduced client set has been determined, in a second phase of the method, the local ML models of only these clients are used for aggregation. To this end, the AI/ML model manager module 320 demands 359, or otherwise requests, the previously trained weights only from the selected subset of clients. The reason for requesting the previously trained weights again from the selected subset of clients is to ensure that the model aggregation manager has the latest version of the models from these clients. This is because even though the selected clients may have participated in the previous round, their local models might have changed due to additional training or pruning during the current round. Therefore, requesting the latest version of their local models ensures that the model aggregation is done using the most up-to-date information. Each selected client responds by sending 360 the values of its local weights back to AI/ML model manager module 320, which in turn sends 361, or otherwise makes available, the list of selected clients and their corresponding weight values to the model aggregation manager 330.

The model aggregation manager 330 aggregates 362 the weights of the selected clients based on pre-defined aggregation rule and sends 363, or otherwise makes available, the aggregated weights back to AI/ML model manager module 320, which in turn sends 364, or otherwise makes available, the aggregated weights to all clients. Note that this updated global model is also delivered to those clients which are over-working and primitive in this round, to replace their previous global model of the previous round. This ends one iteration of the method, and another iteration begins 365 as the steps of training, selection and aggregation are repeated, however starting by the training 353 step using the latest received aggregated ML model (after the first iteration, there is no need for registration 351 or weight initialization 352). The method is iteratively repeated until a targeted learning convergence is reached.

The convergence criterion for the FL method can depend on the specific problem or application being handled. In general, a common approach is to monitor the performance of the FL model on a validation dataset during the training process. The training can be stopped when the validation performance stops improving or starts to degrade. Other convergence criteria could include reaching a certain number of training epochs, or when the change in model weights or loss function between iterations falls below a specified threshold. The decision to stop the FL training process can depend on the ORAN components being used (ORU, ODU, OCU, RIC, SMO) and the application being addressed. For example, in a network slicing scenario, the convergence criterion can be based on meeting the service-level agreement, SLA, requirements for each slice. In an autoscaling scenario, the convergence criterion can be based on the load on the network and the resource utilization of the deployed network functions. In general, the convergence criterion should be tailored to the specific application being addressed to ensure that the FL model is trained to the desired level of accuracy while minimizing computational resources and training time.

In the evolved O-RAN architecture, different components such as O-RU, O-DU, or O-CU, can be embedded with independently assignable functional elements such as MS, AE or DE. Typically, the clients 31n could be either the AE 220 or DE 230 independently assignable O-RAN functional elements. They would be either embedded to or on top of different components of the O-RAN, such as O-RU, O-DU, or O-CU components. These functional elements can perform different tasks related to network management, control, and optimization. One example usage of such scenario could be the case that when ML models (for example, FL) are deployed in live production networks inside the AE 220 components. These models can be aggregated at the upper layer of the hierarchy. In FL, the model training is done by collaboratively aggregating local updates from multiple clients. However, the data collected by these clients locally may not be independent and identically distributed (that is, non-IID), which can affect the quality of the aggregated model. To address this problem, the mutual information-based client selector component can select models from a subset of clients based on their relevance and similarity, which can improve the quality of the model aggregation. For example, if collected models suggest that certain clients have more accurate and representative models, the mutual information-based client selector component can prioritize those clients in the FL training process. This can result in a more accurate and efficient model aggregation without compromising the privacy of the client's data. Overall, the mutual information-based client selector module can enhance the evolved O-RAN architecture by improving the efficiency and effectiveness of machine learning deployments, while also addressing issues related to non-IID data and data privacy.

Hence, different aspects of the invention present a distributed and scalable evolved O-RAN architecture for terrestrial networks. A particular improvement over the evolved architecture is a methodology that implements a novel scalable mutual information MI-driven stochastic federated learning policy for resource provisioning, which is scalable and can provide fast operation of FL-based analytic engines that perform statistical slice-level resource provisioning tasks at proposed intelligent-embedded O-RAN functions (O-DU, O-RU, and O-CU). Only a subset of active clients is selected in each FL round to optimize the federated learning computation time and the underlying resource consumption considering the mutual information gain of the selected models from each local client. This also ensures the scalability of massive number of network slices while maintaining the same computation cost no matter how the number of AEs increase over the network.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example, hard disk, floppy disk, magnetic strips, etc.), optical disks (for example, compact disk (CD), digital versatile disk (DVD), etc.), smart cards, and flash memory devices (for example, EPROM, card, stick, key drive, etc.). Additionally, various storage media described herein can represent one or more devices and/or other machine-readable media for storing information. The term machine-readable medium can include, without being limited to, various media capable of storing, containing, and/or carrying instruction(s) and/or data. Additionally, a computer program product may include a computer readable medium having one or more instructions or codes operable to cause a computer to perform the functions described herein.

In the following, further examples of the invention are provided:

A network component in an open radio access network O-RAN comprising a plurality of network components, the network component comprising at least one memory configured for storing programmable instructions and at least one processor configured for executing the programmable instructions, the programmable instructions configured for executing at least one independently assignable functional element which comprises means of actuating configured for executing network reconfiguration operations.

The network component, wherein the plurality of network components comprises at least one radio unit, or at least one distributed unit, or at least one central unit, or at least one RAN intelligence controller unit, or at least one service and management orchestration framework unit. The network component, wherein the at least one independently assignable functional element further comprises means of monitoring configured for gathering a set of metrics from the plurality of network components. The network component, wherein the at least one independently assignable functional element further comprises means of analysis configured for identifying issues that need handling based on the metrics collected by the means of monitoring. The network component, wherein the at least one independently assignable functional element further comprises means of deciding configured for determining actions for the lifecycle management, LCM, based on the issues identified by the means of analysis. The network component, wherein the means of deciding is further configured for determining a measurement granularity of the means of monitoring and/or prediction parameters of the means of analysis. The network component, wherein the network reconfiguration operations executed by the means of actuating is based on the decisions determined by the means of deciding. The network component, wherein each independently assignable functional element is designed for a particular network component and a particular issue or problem to be handled. The network component, wherein each independently assignable functional element is configured to be executed inline. The network component, wherein each independently assignable functional element is configured to be executed embedded in the network component. The network component, wherein each means of analysis or means of deciding is a client configured to participate in a process of federated learning wherein the models of all clients are aggregated in an aggregated model. The network component, wherein each client comprises means of data collecting configured for receiving data and information available locally in the respective network component. The network component, wherein each client further comprises means of model training configured to train its local model using the data and information from the means of data collecting. The network component, wherein each client further comprises means of evaluating configured for determining the weights of its respective local model using the local weights and the previous global weights. The network component, wherein each client is configured to determine a local mutual information index as a function of the entropy of the output weights of the local and global networks, and the correlation coefficient between them.

An open radio access network, O-RAN, comprising at least one network component for executing at least one independently assignable functional element which comprises means of actuating configured for executing network reconfiguration operations.

The O-RAN network, wherein a subset of all clients is selected for participating in the process of federated learning, comprising a first phase of determining a mutual information index for each client, followed by a second phase wherein a subset of clients is selected based on all mutual information indices of all clients, and wherein the model weights of only this subset is used for model aggregation. The O-RAN network, further comprising means of client selection configured for ranking clients based on the mutual information indices received from them and outputting a subset of clients for aggregation. The O-RAN network, wherein the means of client selection is configured for selecting clients with low mutual information indices. The O-RAN network, wherein the means of client selection is further configured for additionally selecting clients with high mutual information indices. The O-RAN network, further comprising means of managing client models configured for removing a predefined percentage of the local models of the clients. The O-RAN network, further comprising means of aggregating configured for aggregating the model weights of only the subset of clients by minimizing the correlation coefficient between the current local network model and the aggregated global network model.

A computer-implemented method in a network component of an open radio access network O-RAN comprising a plurality of network components, the method comprising executing at least one independently assignable functional element for executing network reconfiguration operations.

The method, wherein the plurality of network components comprises at least one radio unit, or at least one distributed unit, or at least one central unit, or at least one RAN intelligence controller unit, or at least one service and management orchestration framework unit. The method, further comprising gathering a set of metrics from the plurality of network components. The method, further comprising identifying issues that need handling based on the collected metrics. The method, further comprising determining actions for the lifecycle management, LCM, based on the identified issues. The method, further comprising determining a measurement granularity and/or prediction parameters. The method, wherein the network reconfiguration operations is based on the determined decisions. The method, wherein each independently assignable functional element is designed for a particular network component and a particular issue or problem to be handled. The method, wherein each independently assignable functional element is executed inline. The method, wherein each independently assignable functional element is executed embedded in the network component. The method, further comprising participating in a process of federated learning wherein the models of all clients are aggregated in an aggregated model. The method, comprising receiving data and information available locally in the respective network component. The method, comprising training the local model using the collected data and information. The method, comprising determining the weights of each respective client local model using the local weights and the previous global weights. The method, comprising determining a local mutual information index as a function of the entropy of the output weights of the local and global networks, and the correlation coefficient between them.

A computer-implemented method in an open radio access network, O-RAN, comprising at least one network component for executing at least one independently assignable functional element which comprises means of actuating configured for executing network reconfiguration operations.

The method, wherein a subset of all clients is selected for participating in the process of federated learning, comprising a first phase of determining a mutual information index for each client, followed by a second phase wherein a subset of clients is selected based on all mutual information indices of all clients, and wherein the model weights of only this subset is used for model aggregation. The method, further comprising ranking clients based on the mutual information indices received from them and outputting a subset of clients for aggregation. The method, further comprising selecting clients with low mutual information indices. The method, further comprising selecting clients with high mutual information indices. The method, further comprising removing a predefined percentage of the local models of the clients. The method, further comprising aggregating the model weights of only the subset of clients by minimizing the correlation coefficient between the current local network model and the aggregated global network model.

A computer program comprising instructions, once executed on a processor, for performing the method steps.

A computer readable medium comprising instructions, once executed on a processor, for performing the method steps.

**Claims**

1. A network component in an open radio access network O-RAN (200) comprising a plurality of network components, the network component comprising at least one memory configured for storing programmable instructions and at least one processor configured for executing the programmable instructions, the programmable instructions configured for executing at least one independently assignable functional element, configured to be loaded onto any network component of the plurality of network components of the O-RAN network thereby being distributed in any or all of the layers of the O-RAN network, which comprises means of actuating (240) configured for executing network reconfiguration operations.

2. The network component of claim 1, wherein the plurality of network components comprises at least one radio unit (O-RU), or at least one distributed unit (O-DU), or at least one central unit (O-CU), or at least one RAN intelligence controller unit (RIC), or at least one service and management orchestration framework unit (SMO).

3. The network component of claim 2, wherein the at least one independently assignable functional element further comprises means of monitoring (210) configured for gathering a set of metrics from the plurality of network components.

4. The network component of claim 3, wherein the at least one independently assignable functional element further comprises means of analysis (220) configured for identifying issues that need handling based on the metrics collected by the means of monitoring.

5. The network component of claim 4, wherein the at least one independently assignable functional element further comprises means of deciding (230) configured for determining actions for the lifecycle management, LCM, based on the issues identified by the means of analysis.

6. The network component of claim 5, wherein the means of deciding is further configured for determining a measurement granularity of the means of monitoring (210) and/or prediction parameters of the means of analysis (220).

7. The network component of claim 2, wherein each independently assignable functional element is configured to be executed inline or wherein each independently assignable functional element is configured to be executed embedded in the network component.

8. The network component of claim 5, wherein each means of analysis (220) or means of deciding (230) is a client configured to participate in a process of federated learning wherein the models of all clients are aggregated in an aggregated model, and wherein each client comprises means of data collecting configured for receiving data and information available locally in the respective network component and means of model training configured to train its local model using the data and information from the means of data collecting and wherein each client further comprises means of evaluating configured for determining the weights of its respective local model using the local weights and the previous global weights.

9. The network component of claim 8, wherein each client is configured to determine a mutual information index as a function of the entropy of the output weights of the local and global networks, and the correlation coefficient between them.

10. An open radio access network (200), O-RAN, comprising at least one network component according to claim 1 for executing at least one independently assignable functional element, configured to be loaded onto any network component of the plurality of network components of the O-RAN network thereby being distributed in any or all of the layers of the O-RAN network, which comprises means of actuating (240) configured for executing network reconfiguration operations.

11. The O-RAN network of claim 10, wherein a subset of all clients is selected for participating in the process of federated learning, comprising a first phase of determining a mutual information index for each client, followed by a second phase wherein a subset of clients is selected based on all mutual information indices of all clients, and wherein the model weights of only this subset is used for model aggregation.

12. The O-RAN network of claim 11, further comprising means of client selection configured for ranking clients based on the mutual information indices received from them and outputting a subset of clients for aggregation.

13. The O-RAN network of claim 12, wherein the means of client selection is configured for selecting clients with low mutual information indices.

14. The O-RAN network of claim 12, further comprising means of managing client models configured for removing a predefined percentage of the local models of the clients.

15. The O-RAN network of claim 14, further comprising means of aggregating configured for aggregating the model weights of only the subset of clients by minimizing the correlation coefficient between the current local network model and the aggregated global network model.

16. A computer-implemented method in a network component of an open radio access network O-RAN (200) comprising a plurality of network components, the method comprising executing at least one independently assignable functional element, configured to be loaded onto any network component of the plurality of network components of the O-RAN network thereby being distributed in any or all of the layers of the O-RAN network, for executing network reconfiguration operations.

17. A computer-implemented method in an open radio access network (200), O-RAN, comprising at least one network component according to claim 1 for executing at least one independently assignable functional element, configured to be loaded onto any network component of the plurality of network components of the O-RAN network thereby being distributed in any or all of the layers of the O-RAN network, which comprises means of actuating configured for executing network reconfiguration operations.

18. A computer program comprising instructions, once executed on a processor, for performing the method steps of any one of claims 16 to 17.

19. A computer readable medium comprising instructions, once executed on a processor, for performing the method steps of any one of claims 16 to 17.

**Patentansprüche**

1. Netzkomponente in einem offenen Funkzugangsnetz, O-RAN, (200), die eine Vielzahl von Netzkomponenten umfasst, wobei die Netzkomponente mindestens einen Speicher, der zum Speichern programmierbarer Anweisungen konfiguriert ist, und mindestens einen Prozessor umfasst, der zum Ausführen der programmierbaren Anweisungen konfiguriert ist, wobei die programmierbaren Anweisungen zum Ausführen von mindestens einem unabhängig zuweisbaren Funktionselement konfiguriert sind, das konfiguriert ist, um auf eine beliebige Netzkomponente der Vielzahl von Netzkomponenten des O-RAN-Netzes geladen zu werden und dadurch in eine beliebige oder alle Schichten des O-RAN-Netzes verteilt zu werden, das Betätigungsmittel (240) umfasst, die zum Ausführen von Netzneukonfigurationsvorgängen konfiguriert sind.

2. Netzkomponente nach Anspruch 1, wobei die Vielzahl von Netzkomponenten mindestens eine Funkeinheit (O-RU) oder mindestens eine verteilte Einheit (O-DU) oder mindestens eine zentrale Einheit (O-CU) oder mindestens eine RAN-Intelligence-Controller-Einheit (RIC) oder mindestens eine Service- und Management-Orchestration-Framework-Einheit (SMO) umfasst.

3. Netzkomponente nach Anspruch 2, wobei das mindestens eine unabhängig zuweisbare Funktionselement ferner Überwachungsmittel (210) umfasst, die zum Erfassen eines Satzes von Kennzahlen von der Vielzahl von Netzkomponenten konfiguriert sind.

4. Netzkomponente nach Anspruch 3, wobei das mindestens eine unabhängig zuweisbare Funktionselement ferner Analysemittel (220) umfasst, die zum Erkennen von Problemen konfiguriert sind, die basierend auf der durch die Überwachungsmittel erfassten Kennzahlen behandelt werden müssen.

5. Netzkomponente nach Anspruch 4, wobei das mindestens eine unabhängig zuweisbare Funktionselement ferner Entscheidungsmittel (230) umfasst, die zum Ermitteln von Aktionen für das Lebenszyklusmanagement, lifecycle management, LCM, basierend auf den durch die Analysemittel erkannten Problemen konfiguriert sind.

6. Netzkomponente nach Anspruch 5, wobei die Entscheidungsmittel ferner zum Ermitteln einer Messgranularität der Überwachungsmittel (210) und/oder von Vorhersageparametern der Analysemittel (220) konfiguriert ist.

7. Netzkomponente nach Anspruch 2, wobei jedes unabhängig zuweisbare Funktionselement konfiguriert ist, um Inline ausgeführt zu werden, oder wobei jedes unabhängig zuweisbare Funktionselement konfiguriert ist, um in die Netzkomponente eingebettet ausgeführt zu werden.

8. Netzkomponente nach Anspruch 5, wobei jedes Analysemittel (220) oder Entscheidungsmittel (230) ein Client ist, der zum Teilnehmen an einem Prozess des föderierten Lernens konfiguriert ist, bei dem die Modelle aller Clients in einem aggregierten Modell zusammengefasst werden, und wobei jeder Client Datenerfassungsmittel, die zum Empfangen von lokal in der jeweiligen Netzkomponente verfügbaren Daten und Informationen konfiguriert sind, und Modelltrainingsmittel umfasst, die zum Trainieren seines lokalen Modells unter Verwendung der Daten und Informationen von den Datenerfassungsmitteln konfiguriert sind, und wobei jeder Client ferner Auswertungsmittel umfasst, die zum Ermitteln der Gewichtungen seines jeweiligen lokalen Modells unter Verwendung der lokalen Gewichtungen und der vorherigen globalen Gewichtungen konfiguriert sind.

9. Netzkomponente nach Anspruch 8, wobei jeder Client konfiguriert ist, um einen gegenseitigen Informationsindex als Funktion der Entropie der Ausgabegewichtungen der lokalen und globalen Netze und des Korrelationskoeffizienten zwischen ihnen zu ermitteln.

10. Offenes Funkzugangsnetz (200), O-RAN, das mindestens eine Netzkomponente nach Anspruch 1 zum Ausführen mindestens eines unabhängig zuweisbaren Funktionselements umfasst, das konfiguriert ist, um auf eine beliebige Netzkomponente der Vielzahl von Netzkomponenten des O-RAN-Netzes geladen und dadurch in eine beliebige oder alle Schichten des O-RAN-Netzes verteilt zu werden und das Betätigungsmittel (240) umfasst, die zum Ausführen von Netzneukonfigurationsvorgängen konfiguriert sind.

11. O-RAN-Netz nach Anspruch 10, wobei eine Teilmenge aller Clients zum Teilnehmen an dem Prozess des föderierten Lernens ausgewählt wird, der eine erste Phase des Ermittelns eines gegenseitigen Informationsindex für jeden Client umfasst, gefolgt von einer zweiten Phase, in der eine Teilmenge von Clients basierend auf allen gegenseitigen Informationsindizes aller Clients ausgewählt wird, und wobei die Modellgewichtungen nur dieser Teilmenge zur Modellaggregation verwendet werden.

12. O-RAN-Netz nach Anspruch 11, das ferner Clientauswahlmittel umfasst, die konfiguriert sind, um Clients basierend auf den von ihnen empfangenen gegenseitigen Informationsindizes einzustufen und eine Teilmenge von Clients zur Aggregation auszugeben.

13. O-RAN-Netz nach Anspruch 12, wobei die Clientauswahlmitteln zum Auswählen von Clients mit niedrigen gegenseitigen Informationsindizes konfiguriert ist.

14. O-RAN-Netz nach Anspruch 12, das ferner Mittel zum Verwalten von Clientmodellen umfasst, die zum Entfernen eines vordefinierten Prozentsatzes der lokalen Modelle der Clients konfiguriert sind.

15. O-RAN-Netz nach Anspruch 14, das ferner Aggregierungsmittel umfasst, die zum Aggregieren der Modellgewichtungen nur der Teilmenge von Clients durch Minimieren des Korrelationskoeffizienten zwischen dem aktuellen lokalen Netzmodell und dem aggregierten globalen Netzmodell konfiguriert sind.

16. Computerimplementiertes Verfahren in einer Netzkomponente eines offenen Funkzugangsnetzes O-RAN (200), das eine Vielzahl von Netzkomponenten umfasst, wobei das Verfahren das Ausführen mindestens eines unabhängig zuweisbaren Funktionselements umfasst, das konfiguriert ist, um auf eine beliebige Netzkomponente der Vielzahl von Netzkomponenten des O-RAN-Netzes geladen und dadurch in eine beliebige oder alle Schichten des O-RAN-Netzes verteilt zu werden, um Netzneukonfigurationsvorgänge auszuführen.

17. Computerimplementiertes Verfahren in einem offenen Funkzugangsnetz (200), O-RAN, das mindestens eine Netzkomponente nach Anspruch 1 zum Ausführen mindestens eines unabhängig zuweisbaren Funktionselement umfasst, das konfiguriert ist, um auf eine beliebige Netzkomponente der Vielzahl von Netzkomponenten des O-RAN-Netzes geladen und dadurch in eine beliebige oder alle Schichten des O-RAN-Netzes verteilt zu werden, und das Betätigungsmittel umfasst, die zum Ausführen von Netzneukonfigurationsvorgängen konfiguriert sind.

18. Computerprogramm, das Anweisungen umfasst, die, sobald sie auf einem Prozessor ausgeführt werden, die Verfahrensschritte nach einem der Ansprüche 16 bis 17 durchführen.

19. Computerlesbares Medium, das Anweisungen umfasst, die, sobald sie auf einem Prozessor ausgeführt werden, die Verfahrensschritte nach einem der Ansprüche 16 bis 17 durchführen.

**Revendications**

1. Composant de réseau dans un réseau d'accès radio ouvert O-RAN (200) comprenant une pluralité de composants de réseau, le composant de réseau comprenant au moins une mémoire configurée pour stocker des instructions programmables et au moins un processeur configuré pour exécuter les instructions programmables, les instructions programmables étant configurées pour exécuter au moins un élément fonctionnel attribuable indépendamment, configuré pour être chargé sur l'un quelconque composant de réseau de la pluralité de composants de réseau du réseau O-RAN, étant ainsi distribué dans l'une quelconque ou la totalité des couches du réseau O-RAN, qui comprend un moyen d'actionnement (240) configuré pour exécuter des opérations de reconfiguration de réseau.

2. Composant de réseau selon la revendication 1, dans lequel la pluralité de composants de réseau comprend au moins une unité radio (O-RU), ou au moins une unité distribuée (O-DU), ou au moins une unité centrale (O-CU), ou au moins une unité de contrôleur d'intelligence RAN (RIC), ou au moins une unité cadre de gestion et d'orchestration des services (SMO).

3. Composant de réseau selon la revendication 2, dans lequel le ou les éléments fonctionnels attribuables indépendamment comprennent en outre un moyen de surveillance (210) configuré pour collecter un ensemble de métriques à partir de la pluralité de composants de réseau.

4. Composant de réseau selon la revendication 3, dans lequel le ou les éléments fonctionnels attribuables indépendamment comprennent en outre un moyen d'analyse (220) configuré pour identifier les problèmes qui nécessitent un traitement sur la base des mesures collectées par le moyen de surveillance.

5. Composant réseau selon la revendication 4, dans lequel le ou les éléments fonctionnels attribuables indépendamment comprennent en outre un moyen de décision (230) configuré pour déterminer des actions pour la gestion de cycle de vie, LCM, sur la base des problèmes identifiés par le moyen d'analyse.

6. Composant réseau selon la revendication 5, dans lequel le moyen de décision est en outre configuré pour déterminer une granularité de mesure du moyen de surveillance (210) et/ou des paramètres de prédiction du moyen d'analyse (220).

7. Composant de réseau selon la revendication 2, dans lequel chaque élément fonctionnel attribuable indépendamment est configuré pour être exécuté en ligne ou dans lequel chaque élément fonctionnel attribuable indépendamment est configuré pour être exécuté de manière intégrée dans le composant de réseau.

8. Composant de réseau selon la revendication 5, dans lequel chaque moyen d'analyse (220) ou moyen de décision (230) est un client configuré pour participer à un processus d'apprentissage fédéré, dans lequel les modèles de tous les clients sont agrégés dans un modèle agrégé, et dans lequel chaque client comprend un moyen de collecte de données configuré pour recevoir des données et des informations disponibles localement dans le composant de réseau respectif et un moyen d'entraînement de modèle configuré pour entraîner son modèle local à l'aide des données et des informations provenant du moyen de collecte de données, et dans lequel chaque client comprend en outre un moyen d'évaluation configuré pour déterminer les pondérations de son modèle local respectif à l'aide des pondérations locales et des pondérations globales précédentes.

9. Composant réseau selon la revendication 8, dans lequel chaque client est configuré pour déterminer un indice d'informations réciproques en fonction de l'entropie des pondérations de sortie des réseaux locaux et globaux, et du coefficient de corrélation entre eux.

10. Réseau d'accès radio ouvert (200), O-RAN, comprenant au moins un composant de réseau selon la revendication 1 pour exécuter au moins un élément fonctionnel attribuable indépendamment, configuré pour être chargé sur l'un quelconque composant de réseau de la pluralité de composants de réseau du réseau O-RAN, étant ainsi réparti dans l'une quelconque ou la totalité des couches du réseau O-RAN, qui comprend un moyen d'actionnement (240) configuré pour exécuter des opérations de reconfiguration de réseau.

11. Réseau O-RAN selon la revendication 10, dans lequel un sous-ensemble de tous les clients est sélectionné pour participer au processus d'entraînement fédéré, comprenant une première phase de détermination d'un indice d'informations réciproques pour chaque client, suivie d'une seconde phase, dans lequel un sous-ensemble de clients est sélectionné sur la base de tous les indices d'informations réciproques de tous les clients, et dans lequel les pondérations de modèle de ce sous-ensemble uniquement sont utilisées pour l'agrégation de modèles.

12. Réseau O-RAN selon la revendication 11, comprenant en outre un moyen de sélection de clients configuré pour classer les clients en fonction des indices d'informations réciproques reçus de leur part et pour délivrer un sous-ensemble de clients à des fins d'agrégation.

13. Réseau O-RAN selon la revendication 12, dans lequel le moyen de sélection de client est configuré pour sélectionner des clients avec des indices d'informations réciproques faibles.

14. Réseau O-RAN selon la revendication 12, comprenant en outre un moyen de gestion de modèles client configurés pour supprimer un pourcentage prédéfini des modèles locaux des clients.

15. Réseau O-RAN selon la revendication 14, comprenant en outre un moyen d'agrégation configuré pour agréger les pondérations de modèle du seul sous-ensemble de clients en réduisant au minimum le coefficient de corrélation entre le modèle de réseau local actuel et le modèle de réseau global agrégé.

16. Procédé mis en œuvre par ordinateur dans un composant de réseau d'un réseau d'accès radio ouvert O-RAN (200) comprenant une pluralité de composants de réseau, le procédé comprenant l'exécution d'au moins un élément fonctionnel attribuable indépendamment, configuré pour être chargé sur un quelconque composant de réseau de la pluralité de composants de réseau du réseau O-RAN, étant ainsi distribué dans l'une quelconque ou la totalité des couches du réseau O-RAN, pour exécuter des opérations de reconfiguration de réseau.

17. Procédé mis en œuvre par ordinateur dans un réseau d'accès radio ouvert (200), O-RAN, comprenant au moins un composant de réseau selon la revendication 1 pour exécuter au moins un élément fonctionnel attribuable indépendamment, configuré pour être chargé sur un quelconque composant de réseau de la pluralité de composants de réseau du réseau O-RAN, étant ainsi distribué dans l'une quelconque ou la totalité des couches du réseau O-RAN, qui comprend un moyen d'actionnement configuré pour exécuter des opérations de reconfiguration de réseau.

18. Programme informatique comprenant des instructions qui, une fois exécutées sur un processeur, exécutent les étapes du procédé selon l'une quelconque des revendications 16 à 17.

19. Support lisible par ordinateur comprenant des instructions qui, une fois exécutées sur un processeur, exécutent les étapes du procédé selon l'une quelconque des revendications 16 à 17.

# FIG. 1
## PRIOR ART

# FIG. 2

# FIG. 3

**EP 4 447 392 B1**

**Patent documents cited in the description**

- US 20220167236 A